Europäisches Patentamt

(19) European Patent Office

Office européen des brevets

(11) Publication number: **0 008 927**

**A1**

(12) # EUROPEAN PATENT APPLICATION

(21) Application number: **79301776.5**

(22) Date of filing: **30.08.79**

(51) Int. Cl.³: **G 01 F 9/02**

(30) Priority: **02.09.78 GB 3541578**

(43) Date of publication of application:
**19.03.80 Bulletin 80/6**

(84) Designated Contracting States:
**DE FR GB IT NL SE**

(71) Applicant: **Mace, Kevin Brian**
**2, The Glebe**
**Lewknor Oxford(GB)**

(71) Applicant: **Joyce, Alastair Douglas**
**4, The Glebe**
**Lewknor Oxford(GB)**

(71) Applicant: **Nicholls, Derek Howard**
**2 Rock Lane Linslade**
**Leighton Buzzard Bedfordshire(GB)**

(72) Inventor: **Mace, Kevin Brian**
**2, The Glebe**
**Lewknor Oxford(GB)**

(72) Inventor: **Joyce, Alastair Douglas**
**4, The Glebe**
**Lewknor Oxford(GB)**

(72) Inventor: **Nicholls, Derek Howard**
**2 Rock Lane Linslade**
**Leighton Buzzard Bedfordshire(GB)**

(74) Representative: **Haslam, Richard Frederick**
**Lower Wainhill Farmhouse**
**Chinnor, Oxford, OX9 4AB(GB)**

(54) Method of and apparatus for measuring the rate of fuel consumption in a vehicle.

(57) In a method of and apparatus for measuring the rate of fuel consumption of a vehicle driven by a liquid fuel, electrical distance pulses proportional in number to the distance travelled (B) and electrical fuel pulses proportional in number to the units of fuel consumed (A) are derived and fed to a computer which computes the numerical relationship of distance to fuel pulses; this relationship is converted by a preset factor (D) which is dependent on the sytem of units to be used and the physical constant of the vehicle and the resultant distance per unit fuel consumption is displayed (H).

EP 0 008 927 A1

./...

Croydon Printing Company Ltd.

FIG.4

The present invention relates to fuel consumption
indicators for vehicles driven by liquid fuel or gas,
for example a motor car driven by petrol.

It is the aim of the invention to provide an
indicator which will calculate and display using a
digital read-out the rate of fuel consumption of a
motor vehicle in terms of distance travelled per unit
of fuel (i.e. in terms of miles-per-gallon MPG), or
fuel used per units of distance travelled (i.e.litres-
per - 100 kilometres), or any other standard units
of distance and fuel quantity that may be convenient.
For ease of description, hereafter 'miles' and
'gallons' will be used to describe units of distance
and fuel respectively, but will by association imply
all other standard units of distance and fuel quantity.

Prior art attempts to produce the information
provided by the present novel invention suffer from
significant failings or limitations. Analogue
instruments require calibration procedures specific
to each vehicle type on which the instrument is to be
used: such calibration can commonly be conducted only using specialised equipment not available to the motor vehicle user. Moreover, analogue instruments are unable to derive or display an average consumption figure, nor can they, in the one embodiment, provide consumption indications in alternative units of distance against fuel, or vice versa. Although attempts have also been made to provide cpnsumption indicators using a digital format, these devices have been designed to measure consumption only after a specific quantity of fuel had been consumed, e.g. they measured the distance travelled after the consumption of a gallon of fuel, or fractions thereof. Their ability to derive instantaneous consumption figures was therefore dependent on the minimum amount of fuel which could be measured and recorded sensibly: in prior art devices the minimum quantity commonly measurable has been limited to a one hundredth part of a gallon. Moreover, these prior art devices lacked the ability to measure continuously the average consumption achieved whilst continuing to record an instantaneous figure. Limitations in their design also made it impossible for them to be used on alternative vehicle types without specialised calibration, nor could they derive consumption in units other than MPG. More recently, digital devices have attempted to provide average consumption read-outs only. However, these devices are either of later art to the present invention, or are able to produce
consumption figures only after a time delay (commonly
of 6 to 10 seconds) which make them impractical for use
in measuring immediately the effects of driving technique,
environmental conditions, vehicle performance, etc.
Furthermore, the accuracy of the prior art, and later
art devices is dependent on the type of transducers
used to measure both distance travelled/road speed
and fuel quantity consumed/fuel flow rate. It is
known that existing methods used to derive the inputs
to the computation system suffer significant
inaccuracies.

These limitations, failings and inaccuracies
have been to a substantial extent overcome in the
present invention. According to the present invention
there is provided a method of indicating the rate of
fuel consumption of a vehicle driven by a liquid fuel
which comprises deriving electrical distance pulses
proportional in number to the distance travelled by
the vehicle, deriving electrical fuel pulses
proportional in number to the units of fuel being
used, feeding said pulses to a computer and computing
the numerical relationship of distance to fuel pulses
and converting this by a preset factor dependent on
the units to be used and the physical constants of the
vehicle and displaying or recording the resultant
distance/unit fuel consumption.

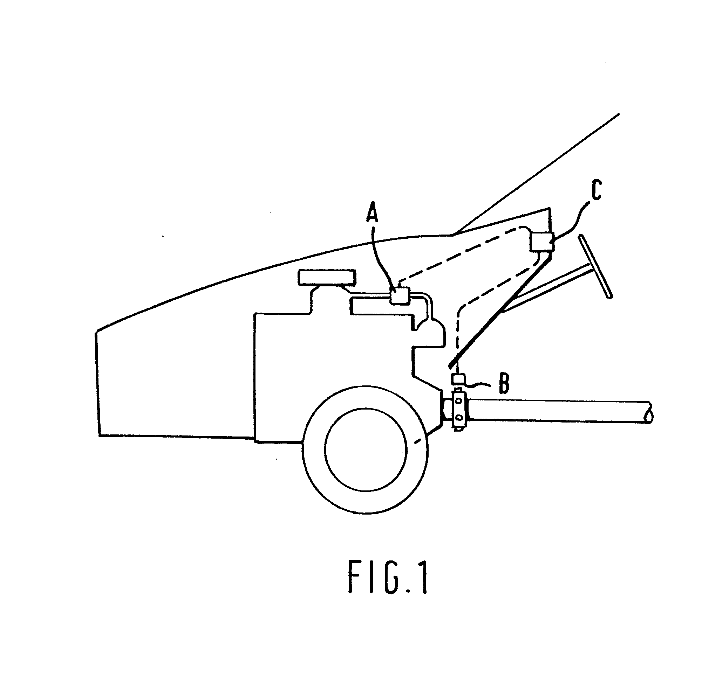

The invention also provides a device for carrying out the above method which in one embodiment comprises a sensor in each of the speed/distance and fuel elements of the vehicle and which are used to produce electrical pulses proportional in number per unit of time to the speed of motion and rate of fuel flow of the vehicle, together with computing and display apparatus as shown in Figs 1 to 4 of the accompanying drawings. Referring to Fig 1, a fuel transducer (A) is inserted into the fuelline of the vehicle between the fuel tank and the carburettor. The distance/speed measuring transducer (B) is attached to the propellor drive shaft of the vehicle or alternatively may be inserted between the gearbox final drive and the speedometer via the speedometer drive shaft. Electrical connections are lead from the transducers to the computation and display apparatus (C) housed within the vehicle driving compartment. The indicator of the present invention will give:

(a) A continuous and instantaneous read-out of consumption (eg MPG) to reflect road speed and fuel flow rate; or

(b) A display on seledtion of the average consumption (eg average MPG) that the vehicle has achieved on a journey, trip, or test drive.

By the present invention it is possible to provide information heretofore unobtainable in prior art devices, such as an instantaneous read-out combined with a continuously updated average read-out; the device according to the invention can compute the consumption in any of the alternative units of distance and fuel quantity used internationally; it permits calibration to the vehicle without specialised test equipment; it can provide information of consumption in an immediate time-scale useful for influencing driving technique;it uses transducers which provide significantly greater accuracy than prior art devices and derives consumption regardless of distance travelled or quantity of fuel used.

In one embodiment the invention comprises: Distance/Speed Transducer. The distance/speed transducer measures the forward motion of the vehicle by detecting and counting the revolutions of the final drive of the vehicle's gearbox. This may be accomplished either by measuring the rotation of the vehicle's axle propellor drive shaft or by measuring rotation of the vehicle's speedometer drive cable. The speed transducer comprises a rotating element attached to either the axle drive shaft or the speedometer cable, and a fixed pulse detection and transmission device mounted adjacent to the rotating element. Electrical pulses are produced from the rotation of the shaft/cable using one of the following principles:

(a) Photodetection using a rotating chopper disc attached to the spindle and a light transmitter and light-sensitive detector attached to the casing.

(b) Electro-magnetic inductance,using magnets attached to the rotor arm or disc and a coil attached to the sensor casing.

(c) Electro-magnetic resistance, using magnets attached to the rotor arm or disc and a magnetic diode attached to the casing.

(d) The successive make and break of electrical contacts by means of a cam, or a disc with alternate conducting and insulating segments, or by means of a magnet and 'reed' switch arrangement.

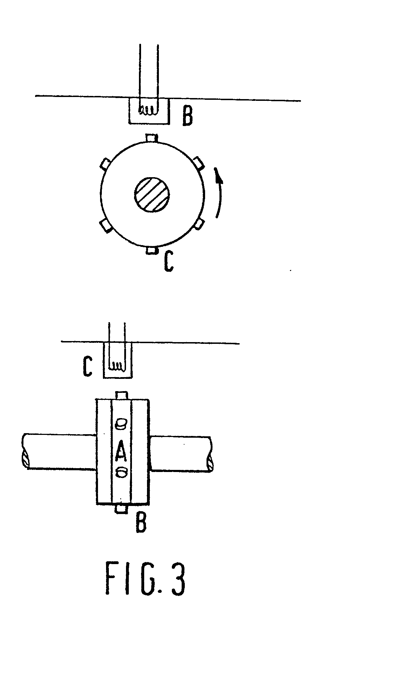

In the preferred embodiment of the invention the distance sensor comprises the following, depicted at Fig.3. The sensor comprises a circlet (A) to be attached to the rotating shaft or cable and a fixed pulse detection device (B) to be fitted to the vehicle body close to the circlet. The circlet has attached around its circumference one or more magnets.(C) The fixed pulse detection device comprises an induction pick-up coil. Rotation of the drive shaft and hence the circlet and magnets causes a current to be induced in the coil each time a magnet passes the coil. This induced current is passed as one pulse of energy to the computer. The number of pulses produced per mile will in this way correspond to the number of revolutions per mile made by the drive shaft or cable and the number of magnets attached to the circlet.

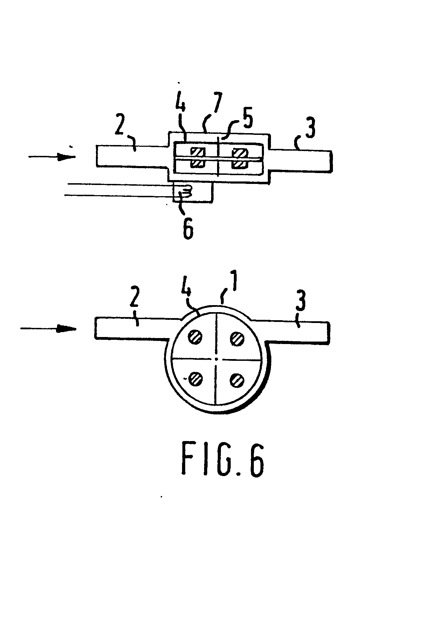

Fuel Flow Transducer. The fuel flow transducer shown in Fig.6 consists of a flow chamber 1, with entry and exit tubes 2 and 3 and a turbine 4 inside the flow chamber and rorating about a spindle indicated at 5. The transducer is introduced into the fuel line between the fuel tank and the carburettor. Fuel flow causes the turbine to rotate at a rate proportional to the rate of fuel flow. Electrical pulses are detected by sensors, one of which is shown at 6, mounted on the casing 7 of the flow chamber and are produced by the passage of magnets 8 mounted on the turbine rotor 4 or by any other one of the methods described at (a), (b), (c) and (d) as apply to the distance/speed sensor. The flow transducer may be used in combination with means, described in a separate patent application, of eliminating or reducing the adverse effects of friction on turbine rotor rotation, and of eliminating or reducing the adverse effects of vapour/ air in the fuel lines of the vehicle.

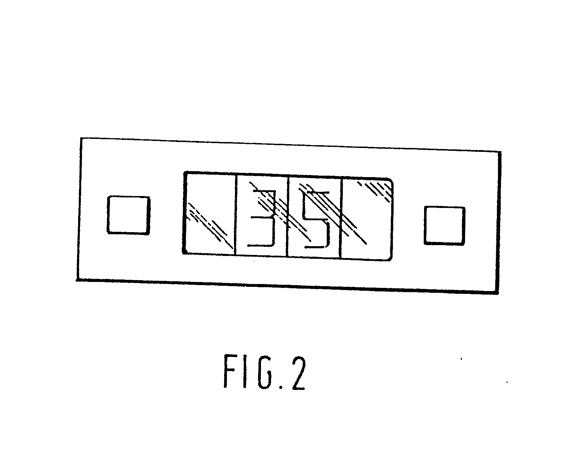

Computer/Calculator. Electrical pulses from both the speed and fuel sensors or transducers (as the case may be) are transmitted to a computer, normally mounted within the vehicle driving compartment (and usually attached to the vehicle instrument panel or dashboard). The computer counts and stores the incoming pulses, conducts the necessary calculations and displays them on digital electronic display using either light emitting diodes, fluorescent discharge lamps/displays, liquid crystal displays or other means of displaying digital read-outs, as depicted at Fig.2. Electrical computing apparatus for carrying out such operations is well known. The computer is mounted within a suitable casing, integral with which or attached to which are selector switches used to select the mode of operation of the computer, and also used to insert a constant (which may be altered manually) appropriate to the vehicle type and used for the computation of the consumption in alternative units of distance and fuel.

Method. The distance travelled and speed of motion of a vehicle can be measured by counting the number of turns made by the propellor drive shaft or the speedometer cable and its rate of rotation. For a given vehicle, the shaft or cable will rotate a fixed number of turns per mile. By design, the distance/ speed transducer used in the invention also produces a correspondingly fixed number of pulses per revolution of the shaft or cable, and hence per mile also. By design also, the fuel flow transducer used in the invention produces a fixed number of pulses per gallon of fuel.

This number of pulses per mile, compared with the number of pulses per gallon, results in a fixed numerical relationship of distance-to-fuel pulses equivalent to one mile per gallon. By counting the number of distance pulses for each fuel pulse (or vice versa) and computing this number as a multiple of that ·fixed for one mile per gallon, the consumption in multiples of miles per gallon can be derived. In the invention, the computation may be performed in one of two ways:

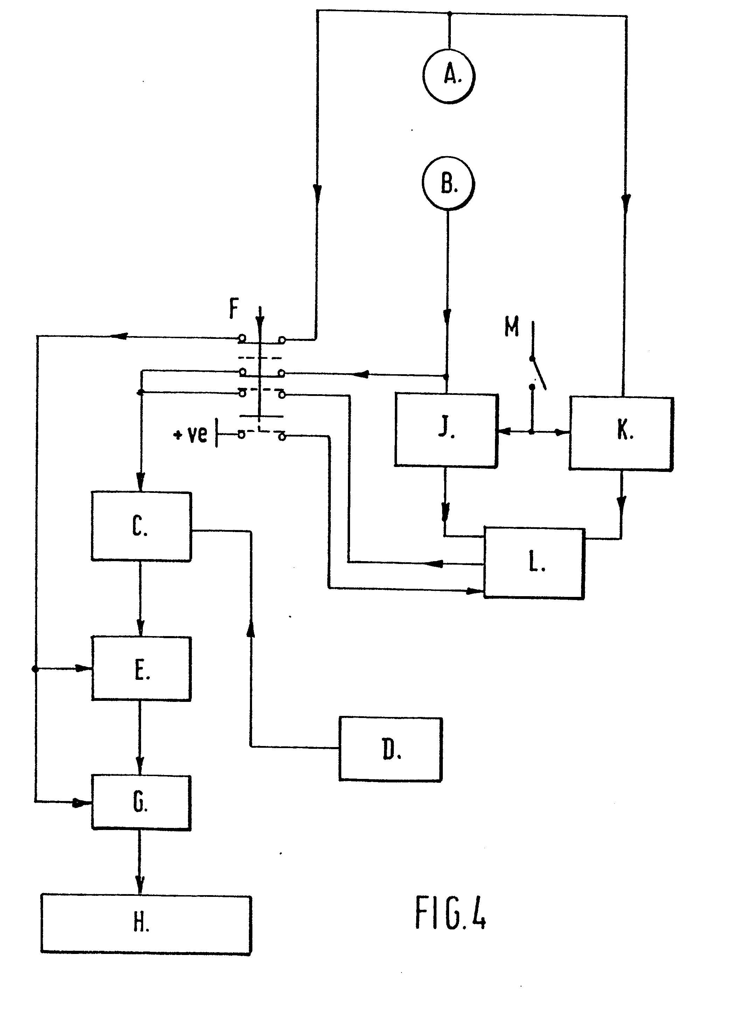

As shown in Fig.4, the computer accepts pulses from fuel transducer (A) and distance/speed transducer (B).The mode of operation is then dependent on the selection made by the operator by operating switch F either to display the INSTANTANEOUS read-out or to display the AVERAGE read-out. To derive the INSTANTANEOUS miles-per-gallon, distance pulses are sent to a pulse-train-generator (C) which in response to each distance pulse also transmits a number of pulses, in a multiple pre-set by the 'constant' switch (D). This train of pulses is then further transmitted to a binary or BCD counter (E), which operates only on receipt of a fuel pulse to count the number of distance pulses achieved between fuel pulses. With the switch (F) selected to display the INSTANTANEOUS consumption figure, this count of MPG is then passed via the decoder/latch/driver (G), which operates also on receipt of the same fuel pulse used to initiate counter (E) to decode the pulse train count of MPG, latch in the count until the next appropriate fuel pulse is received and to drive the display to indicate the INSTANTANEOUS figure.

On receipt of each successive fuel pulse or a fixed multiple number of fuel pulses, the sequence repeats itself with a reset signal applied to counter (E) to start the count at zero for each sequence.

Each distance and fuel pulse is also directed into its respective memory store (J) and (K) continuously, and added to the store. When the switch (F) is selected to the AVERAGE position, divider (L) is initiated and proceeds to divide the number of distance pulses by the number of fuel pulses received. The resultant is then factored by constant switch (D) and passed to decoder/latch/driver (G) which initiates the display (H). The display is then held in by the latch (G), until switch (F) is returned to the INSTANTANEOUS position. On return of switch (F) to the INSTANTANEOUS position, power is applied to the reset line to counter (E), which reverts to zero. In order to permit the repeated computation of the AVERAGE consumption, irrespective of distance travelled or fuel used, the operation of the memory reset switch (M) causes the stores (J) and (K) to revert to zero. When switch (M) is released, distance and fuel pulses are again able to be received and totalled in their respective stores. The computation of the AVERAGE consumption is then as described above.

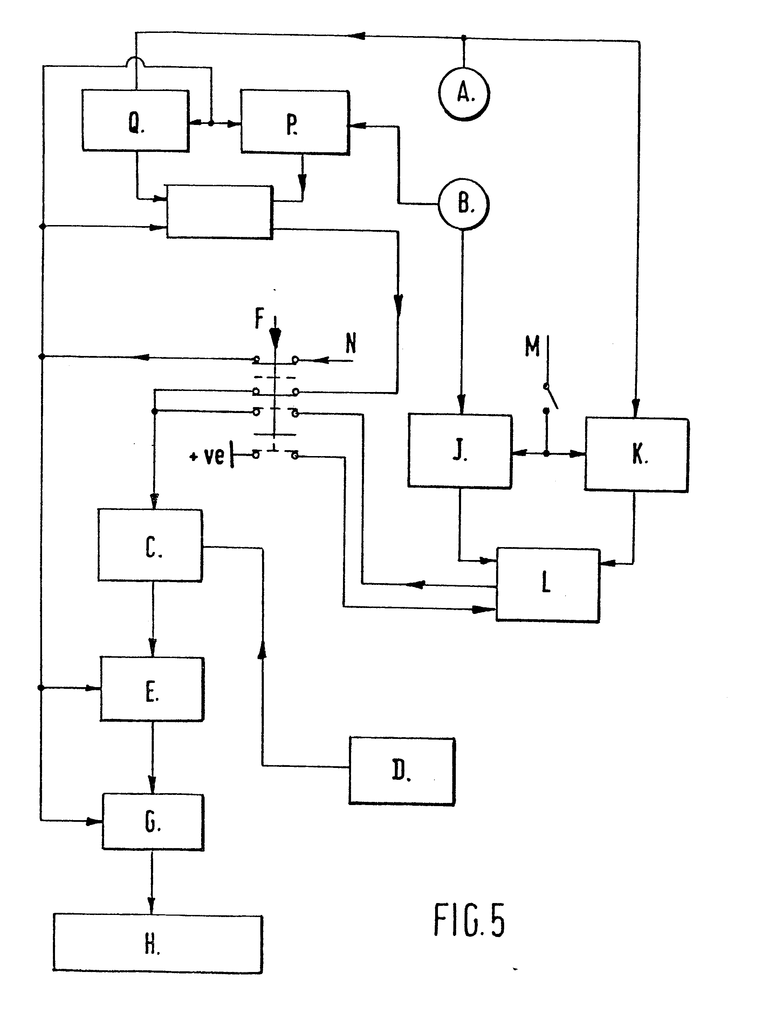

The system of totalling both distance and fuel pulses, followed by simultaneous division of one by the other may also be used to determine both the INSTANTANEOUS and AVERAGE consumption rates. In this, the alternative method used in the invention, and is
illustrated in Fig.5.  In order to derive INSTANTANEOUS consumption a clock trigger pulse is introduced at N to initiate the division process at a suitable time interval,usually in the order of once per second. This procedure enables both distance and fuel pulses received within the specified time to be sampled within a limited capacity memory stores P and Q separate from the main memory store.  Operation of the clock pulse replicates the operation of the AVERAGE  switch described previously,but within the limited capacity store only so that the consumption achieved in the specified time interval is displayed and latched in until receipt of the next clock pulse.

The respective stores are reset to zero on receipt of each successive clock trigger pulse, and proceed to recount pulses between individual clock pulses.

The AVERAGE consumption is still derived in a manner similar to that already described with reference to Fig. 4 using a separate, larger capacity memory for the distance and fuel pulses.

Constant  The number of distance/speed pulses produced by the transducer per  mile is a function of the number of turns per mile made by the vehicle's gearbox final drive. This number of turns per mile may vary dependent on the ratios used in the vehicle's gearbox and the size of road wheels fitted. For example the number of turns per mile may vary between some 500 and 2000 turns per mile. The invention takes such variations into account by the incorporation of a pre-set (but manually alterable) constant fed from circuit D (Figs 4 and 5)into the computing system. The constant sets the factor to be applied to the pulse counter by the pulse train generator,or to the resultant of the division of distance and fuel pulse counts. To calibrate for vehicle type therefore it is necessary to set the constant once only, upon initial installation of the invention into a vehicle, and until its transfer to another vehicle.

By virtue of the constant used, the invention can also, without modification, compute the consumption in any fixed units used internationally to measure distance against fuel quantity, for example miles-per-US gallon,miles-per-Imperial Gallon or kilometres per litre. This is enabled in the invention by adjusting the constant put in to the computer. The constant used is a function of the number of pulses per unit of distance compared with the number of pulses per unit of fuel. For example, on a vehicle with a gearbox drive ratio of 1040 turns per mile, if consumption is required to be displayed in terms of miles per imperial gallon, then the constant to be applied is determined by the following:   pulses per imperial gallon divided by pulses per mile (where pulses per mile is 1040 multiplied by the number of pulses per revolution).

Similarly, consumption may be derived with reference to the US gallon, or litres, merely by adjusting the number of pulses per unit of fuel used in the equation.

In order to derive consumption in units of fuel consumed against distance travelled, for example litres per 100 kilometres, the computer reverses the division process to establish number of fuel pulses relative to the number of distance pulses.

The invention may also be used to compute and display the distance travelled.

The invention may also be used to compute and display fuel used.

The invention may, by use of the clock timer, be used to compute and display immediate road speed and average speed.

The invention may, by incorporation of an analogue to digital 'pick-off' from the vehicle's fuel contents measuring system, be used to compute and display fuel remaining and distance-available-using-fuel-remaining.

The invention may, by addition of a suitable printing mechanism, be used to record the consumption achieved.

As an alternative to counting at each successive fuel pulse, the distance pulse counting sequence may be made to repeat itself at the arrival of a multiple number of fuel pulses, i.e. between successive fuel pulses,but on arrival of every second, third,fourth pulse et seq.

The count of distance pulses may also be made relative to a multiple number of fuel pulses i.e. counting between 2,3, or 4 pulses et seq.

CLAIMS

1. A method of indicating the rate of fuel consumption of a vehicle driven by a liquid fuel which comprises deriving electrical distance pulses proportional in number to the distance travelled by the vehicle, deriving electrical fuel pulses proportional in number to the units of fuel being used, feeding said pulses to a computer and computing the numerical relationship of distance to fuel pulses and converting this by a preset factor dependent on the units to be used and the physical constants of the vehicle and displaying or recording the resultant distance/unit fuel consumption.

2. A method as claimed in claim 1 and comprising storing the distance and fuel input counts so that, at will, either the instantaneous or the average fuel consumption may be displayed or recorded.

3. A method as claimed in claim 1 or 2 wherein, to derive the instantaneous fuel consumption, distance pulses are fed to a pulse train generator (D) which in response to each distance pulse produces a train of pulses as a multiple of the distance pulses preset by a constant switch, this train of pulses is then fed to a binary counter (E) which operates only on receipt of a fuel pulse to count the number of distance pulses achieved between fuel pulses, this count being then passed through a decoder/latch/driver (G)
which operates also on receipt of the same fuel pulse
to initiate the counter (E) to decode the pulse
train count of fuel consumption, latch in the count
until the next appropriate fuel pulse is received and
to drive the display to indicate the instantaneous
figure.

4. A method as claimed in claim 1 or 2 wherein, to
derive the average fuel consumption, each distance
and fuel pulse is directed to its respective memory
store (J) and (K); the stored pulses are fed to a
divider (L) the resultant is factored by a constant
switch (C) and passed through pulse train generator
(D) and thence to decoder/latch/driver (G) which
initiates the display (H).

5. A method as claimed in claim 1 or 2 wherein,
to derive an instantaneous consumption rate, a
clock trigger pulse is used to initiate the division
process at suitable time intervals, after storing in
a memory store both distance and fuel pulses during
the time interval and the resultant is passed through
a pulse train generator and thence to a decoder/latch/
driver (G) which initiates the display (H).

6. A rate of fuel consumption indicator for a vehicle
driven by a liquid fuel which comprises means for
deriving electrical distance pulses  proportional in number to the distance travelled by the vehicle, means for deriving electrical fuel pulses proportional in number to the units of fuel used, a computer for computing the numerical relationship of distance to fuel pulses, means for factorising this by a preset factor and a display or recorder for showing the resultant distance/unit fuel consumption.

7. An indicator as claimed in claim 6 and including storage and switching means whereby the instantaneous or the average fuel consumption may be displayed or recorded.

8. A method for indicating the rate of fuel consumption of a vehicle driven by a liquid fuel substantially as herein described.

9. A rate of fuel consumption indicator substantially as herein described.

FIG.1

FIG.2

FIG.3

FIG.4

0008927

FIG.5

FIG.6

0008927

Application number

European Patent Office

**EUROPEAN SEARCH REPORT**

EP 79 30 1776

## DOCUMENTS CONSIDERED TO BE RELEVANT

| Category | Citation of document with indication, where appropriate, of relevant passages | Relevant to claim |
|---|---|---|
| X | US - A - 3 983 372 (A. KLAVER)<br>* Figures 1-4; column 2, line 54 - column 3, line 61 * | 1,3,4, 6 |
| | US - A - 3 614 617 (B.S. BLAKE Jr.)<br>* Figure 1; column 1, lines 37-60 * | 1,3,4, 6 |
| | US - A - 3 908 451 (M.C. WALKER)<br>* Figure 1; column 3, lines 5-61 * | 1-4, 6,7 |
| | US - A - 4 050 295 (N.L. HARVEY)<br>* Figure 5; column 4, lines 15-60 * | 1-4, 6,7 |
| | US - A - 3 967 097 (J.A. MORETTI)<br>* Figures 1-4; column 3, line 44 - column 4, line 45 * | 1,2, 4-7 |
| | US - A - 3 927 305 (F. GRUHL)<br>* Figures 1-3 ; column 3, lines 7-50 * | 1,5,6 |
| | US - A - 3 549 868 (F.R. WATSON)<br>* Figures 2,3; column 3, lines 15-62 * | 1 |

**CLASSIFICATION OF THE APPLICATION (Int. Cl. 3)**

G 01 F 9/02

**TECHNICAL FIELDS SEARCHED (Int.Cl. 3)**

G 01 F 9/02
9/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-11-1979 | THIBO |

EPO Form 1503.1 06.78